# EUROPÄISCHE PATENTSCHRIFT

(11) **EP 3 534 291 B1**
(45) Veröffentlichungstag und Bekanntmachung des Hinweises auf die Patenterteilung: **12.02.2020**
(21) Anmeldenummer: 18159349.2
(22) Anmeldetag: 01.03.2018
(51) Int. Cl.: G06K 7/10, G06K 7/14

(54) **OPTOELEKTRONISCHE CODELESEVORRICHTUNG UND VERFAHREN ZUM LESEN VON CODES**
OPTOELECTRONIC CODE READER AND METHOD FOR READING CODES
DISPOSITIF DE LECTURE DE CODE OPTOÉLECTRONIQUE ET PROCÉDÉ DE LECTURE DE CODES

(43) Veröffentlichungstag der Anmeldung: 04.09.2019
(73) Patentinhaber: Sick AG, 79183 Waldkirch (DE)
(72) Erfinder: Wehrle, Klemens, 79297 Winden (DE); Bierer, Andreas, 79194 Gundelfingen (DE); Denz, Björn, 79211 Denzlingen (DE)

(56) Entgegenhaltungen:
- US-A- 6 015 089
- US-A1- 2013 256 416
- US-B1- 9 501 681

## Beschreibung

Die Erfindung betrifft eine optoelektronische Codelesevorrichtung und ein Verfahren zum Lesen von Codes.

Codeleser sind von Supermarktkassen, zur automatischen Paketidentifikation, Sortierung von Postsendungen, von der Gepäckabfertigung in Flughäfen und aus anderen Logistikanwendungen bekannt. Häufig ist nicht festgelegt, an welcher Objektseite und in welcher Orientierung ein Code angebracht ist. Deshalb werden oft mehrere Codeleser in verschiedenen Perspektiven angebracht, um Objekte von mehreren oder allen Seiten aufzunehmen.

In einem Codescanner wird ein Lesestrahl mittels eines Drehspiegels oder eines Polygonspiegelrads quer über den Code geführt. Diese Technologie war in der Vergangenheit beherrschend und ursprünglich die einzig verfügbare. Inzwischen setzen sich auch in den genannten Anwendungen zunehmend kamerabasierte Codeleser durch, die mittels eines Bildsensors Bilder der Objekte mit den darauf befindlichen Codes aufnehmen. Eine Bildauswertungssoftware extrahiert aus diesen Bildern die Codeinformation. Im Zuge des technologischen Umbruchs werden auch Hybridsysteme verwendet, in denen sowohl Codescanner als auch kamerabasierte Codeleser verbaut sind.

Durch die verbesserten Lesefähigkeiten der kamerabasierten Codeleser treten aber auch neue Probleme zutage. Beispielsweise finden sich an manchen Gepäckstücken am Flughafen zusätzlich den zu erfassenden Hauptcodes noch alte Barcodes mit früheren Flugzielen, die nicht vollständig entfernt wurden und die auch Abrisscodes (stub codes) genannt werden. Solche Abrisscodes sind vergleichsweise klein, haben also eine geringe Höhe oder Strichlänge, und wurden von den Codescannern übersehen oder zumindest nicht in voller Länge überstrichen und daher nicht vollständig erfasst.

Mit heutiger Kameratechnologie werden nun auch solche Abrisscodes erfolgreich decodiert. Das führt dann zu einer Mehrfachlesung, nämlich des eigentlichen Hauptcodes und des Abrisscodes. Mangels Eindeutigkeit des Sortierziels wird ein Fehler gemeldet (MultiRead) und in der Regel eine manuelle Nachbearbeitung oder Handsortierung erforderlich. Es ist keine Lösung, einfach die Decodierfähigkeit der kamerabasierten Codeleser künstlich herabzusetzen, damit die Abrisscodes wie früher übersehen werden, denn damit würde auch der Vorteil der verbesserten Lesefähigkeit von Hauptcodes aufgegeben. Die aus Sicht von rein scannenden Systemen zusätzliche Fehlerquelle hebt aber viele der ansonsten mit kamerabasierten Codelesern erreichten Vorteile auf. Gerade beim Retrofit, d.h. der Umrüstung bestehender, auf Codescannern basierender Systeme auf kamerabasierte Systeme oder Hybridsysteme, wäre eine Anpassung der Datenschnittstelle zum Validieren der Codeinhalte allenfalls mit viel Aufwand in der übergeordneten Steuerung zu realisieren.

Die US 2013/0256416 A1 offenbart ein Barcode-Erkennungsverfahren in Bildern von mit Barcodes versehenen Mikrobeads. Dabei werden in einer Bildaufbereitung gefundene potentielle Coderegionen anhand ihrer Geometrie auf Übereinstimmung mit eine erwarteten, in der Regel rechteckigen Geometrie geprüft.

In der US 9 501 681 B1 wird ein Verfahren zum Decodieren von optischen Codes vorgestellt. In den gefundenen interessierenden Bereichen wird das Bildverhältnis (aspect ratio) eines Kandidaten für einen Datamatrixcode geprüft.

Es ist daher Aufgabe der Erfindung, die Fehlerrate einer optoelektronischen Codelesevorrichtung zu verringern.

Diese Aufgabe wird durch eine optoelektronische Codelesevorrichtung und ein Verfahren zum Lesen von Codes nach Anspruch 1 beziehungsweise 14 gelöst. Die Codelesevorrichtung umfasst mindestens einen kamerabasierten Codeleser, typischerweise mehrere davon in unterschiedlichen Perspektiven, wobei auch Hybridsysteme mit zumindest einem Codescanner denkbar sind. Der kamerabasierte Codeleser nimmt Bilddaten des Lesebereichs auf, und eine Decodiereinheit findet darin Codebereiche und decodiert sie. Zudem stellt eine Filtereinheit fest, ob mehrere Codes gelesen wurden (MultiRead). Damit sind insbesondere mehrere Codes unterschiedlichen Inhalts gemeint, redundante Codes oder mehrfaches Lesen desselben Codes würde keine Mehrdeutigkeit bei der Behandlung des codetragenden Objekts nach sich ziehen. Die herkömmliche Reaktion auf eine Mehrfachlesung ist eine Fehlerausgabe und manuelle Behandlung.

Die Erfindung geht nun von dem Grundgedanken aus, dass im Falle einer Mehrfachlesung versucht wird, den auszuwertenden Hauptcode von versehentlich mitgelesenen zusätzlichen Codes zu unterscheiden, wie den einleitend genannten Abrisscodes. Dazu wird die Geometrie des jeweiligen Codebereichs untersucht. Das kann die Geometrie des Codes selbst, aber auch die Geometrie des Etiketts oder Labels sein, auf dem sich der Code befindet. Eine entsprechende Segmentierung von Codebereichen beispielsweise anhand von zusätzlicher Sensorinformation, von Farb- oder Kontrastkriterien, hat in der Decodiereinheit im Rahmen des Auslesens ohnehin stattgefunden, so dass die Geometrie im Prinzip zur Verfügung steht, aber herkömmlich nicht weiter beachtet wurde. Auf Basis der Geometrie wird entschieden, welcher der mehreren Codes ein gültiger Code ist und welcher Code beispielsweise verworfen werden kann.

Die Erfindung hat den Vorteil, dass Fehler durch Mehrfachlesung mit einer sehr einfachen Maßnahme drastisch reduziert werden, entsprechend die Lese- oder Sortierrate verbessert wird. Somit können kamerabasierte Codeleser mit ihren Vorteilen gegenüber Codescannern eingesetzt werden, ohne dass dadurch eine zusätzliche Fehlerquelle insbesondere durch Lesen von Abrisscodes entsteht.

Die Filtereinheit ist bevorzugt dafür ausgebildet, die Geometrie anhand des Verhältnisses von Breite zu Höhe zu prüfen. Die implizite Annahme rechteckiger Codebereiche, Labels oder Codes ist zulässig, da Codes üblicherweise in dieser Form verwendet werden. Dieses Seitenverhältnis (Aspect Ratio) ist ein sehr einfaches Kriterium, das ohne Aufwand geprüft werden kann. Zugleich ist es ein bezüglich Abrisscodes sehr selektives Kriterium. Das ist wichtig, denn es wäre kontraproduktiv, wenn die Leserate durch fehlerhaften Ausschluss von an sich gelesenen Hauptcodes wieder beeinträchtigt würde.

Die Filtereinheit ist bevorzugt dafür ausgebildet zu prüfen, ob die Geometrie einem Quadrat entspricht. Ein Hauptcode ist zumindest einigermaßen quadratisch. Dabei kommt es keineswegs auf mathematische Exaktheit an. Ein Abrisscode weist eine geringe Höhe im Vergleich zu seiner Breite auf, wobei die Höhe als die Richtung parallel zu den Strichen eines Barcodes definiert ist. Über das Kriterium der Geometrie eines Quadrats soll nur gegen solche deutlich langgezogenen Rechtecke unterschieden werden.

Die Filtereinheit ist bevorzugt dafür ausgebildet, einen Code bei einer Geometrie mit Seitenverhältnis von zumindest 1,5:1 als nicht quadratisch zu erkennen. Das Seitenverhältnis bezeichnet wieder das Verhältnis von Breite zu Höhe. Mit der Zahl 1,5:1 wird eine Schwelle angegeben, ab wann ein Code nicht mehr als quadratisch angesehen wird. Es sind schärfere Schwellen denkbar, allgemein bei n:1 für beliebiges, auch nichtganzzahliges n ≥ 2. Explizit als Beispiel genannt seien noch n= 2, 3, 4, 5.

Die Filtereinheit ist bevorzugt dafür ausgebildet, einen nicht quadratischen Code als ungültigen Code anzusehen. Damit wendet die Filtereinheit das geometrische Kriterium an, dass Abrisscodes typischerweise eine geringe Höhe aufweisen. Umgekehrt wird ein zumindest weitgehend quadratischer Code als Hauptcode angesehen.

Die Filtereinheit ist bevorzugt dafür ausgebildet, eine Ausgabe von Codeinhalten ungültiger Codes zu unterdrücken. Ungültige Codes werden also nicht mehr nach außen weitergegeben oder weggefiltert. Es werden nur die als gültig identifizierten Codes, insbesondere ausreichend quadratische Codes ausgegeben. Nach außen verhält sich die Codelesevorrichtung so, als habe sie den Abrisscode nicht lesen können. Die Codelesevorrichtung profitiert aber weiter von ihren verbesserten Lesefähigkeiten bei der Erfassung von Hauptcodes.

Die Filtereinheit ist bevorzugt dafür ausgebildet, im Falle mehrerer als gültig identifizierter Codes eine Mehrfachlesungs-Nachricht auszugeben. Vorzugsweise gilt das nur für mehrere gültig identifizierte Codes unterschiedlichen Inhalts, denn nur dann entsteht eine wirkliche Mehrdeutigkeit in Bezug auf die weitere Behandlung des codetragenden Objekts. Werden mehrere Hauptcodes gelesen, so hat die Mehrfachlesung nichts mit Abrisscodes zu tun. Möglicherweise kommt an dieser Stelle auch das geometrische Kriterium zur Unterscheidung zwischen Hauptcode und Abrisscode an seine Grenzen. Jedenfalls wird in einem solchen Fall wie bisher eine Fehlermeldung ausgegeben, die auf die Mehrfachlesung (MultiRead) hinweist. Es muss vermutlich eine manuelle Nachbearbeitung beziehungsweise Handsortierung folgen. Dieser Fall tritt aber deutlich seltener auf als herkömmlich, da zumindest die anhand der Geometrie identifizierbaren Abrisscodes keine solche Mehrfachlesungs-Nachricht mehr auslösen.

Die Filtereinheit ist bevorzugt dafür ausgebildet, im Falle keines als gültig, jedoch mehrerer als ungültig identifizierter Codes eine Mehrfachlesungs-Nachricht auszugeben. Das ist der Spiegelfall, in dem gemäß dem geometrischen Kriterium gar kein Hauptcode übrig bleibt. Das kann tatsächlich so sein, in diesem Fall liegt die Fehlerursache außerhalb der Codelesevorrichtung. Im Zuge der manuellen Nachbearbeitung stellt sich möglicherweise noch heraus, dass doch einer der gelesenen Codes ein Hauptcode war, der sich aber geometrisch zu wenig von einem Abrisscode unterscheidet.

Die Mehrfachlesungs-Nachricht kann sich vorteilhafterweise als Hilfestellung für die manuelle Nachbearbeitung von derjenigen bei mehreren gelesenen Hauptcodes des vorigen Absatzes unterscheiden. Vereinfacht ausgedrückt wurden dort zu viele und hier zu wenig Hauptcodes gelesen, und ein geeigneter Hinweis auf diesen Unterschied erleichtert die manuelle Nachbehandlung.

Die Decodiereinheit ist bevorzugt dafür ausgebildet, Barcodes zu decodieren. Noch bevorzugter ist die Decodiereinheit ausschließlich zum Lesen von Barcodes ausgebildet. Entsprechend sind in der Anwendung Barcodes als zu erfassende Codes angebracht. Ein Barcode ist eigentlich ein 1 D-Code, obwohl natürlich ein realer Barcode eine 2D-Fläche einnimmt. Seine eindimensionale Natur ist aber ein Grund, warum herkömmlich die Höhe des Codes parallel zu seinen Strichen und damit auch das Seitenverhältnis gleichgültig sind und unbeachtet bleiben.

Bevorzugt ist die Decodiereinheit in dem Codeleser und die Filtereinheit in einer Systemeinheit außerhalb des Codelesers implementiert. Die Funktionalität der Steuer- und Auswertungseinheit mit Decodier- und Filtereinheit kann auf unterschiedliche Weise unter den Komponenten der Codelesevorrichtung aufgeteilt werden. Eine vorteilhafte Ausführungsform weist dem Codeleser das eigentliche Codelesen und damit die Decodiereinheit zu. Die Filtereinheit arbeitet vorzugsweise mit den Daten aller beteiligten Codeleser und/oder Daten von mehreren Zeitabschnitten (Frames), um alle relevanten Codeinformationen eines Objekts zur Verfügung zu haben. Dazu umfasst die Steuer- und Auswertungseinheit eine zentrale Systemeinheit mit der Filtereinheit außerhalb des Codelesers.

Die Decodiereinheit ist bevorzugt dafür ausgebildet, das Verhältnis von Breite zu Höhe an die Filtereinheit auszugeben. Im Zuge der Decodierung werden die Bilddaten regelmäßig als Vorverarbeitungsschritt segmentiert. Die Breite und Höhe beziehungsweise deren Verhältnis sind daher ohne großen Mehraufwand in der Decodiereinheit erfassbar. Deshalb ist es vorteilhaft, diese Größen zu übergeben, statt dass die Filtereinheit erneut auf die Bilddaten zugreifen muss. Besonders nützlich ist diese Datenübergabe, wenn die Decodiereinheit dem Codeleser und die Filtereinheit einer zentralen Systemeinheit zugeordnet ist.

Die Codelesevorrichtung weist bevorzugt einen Geometrieerfassungssensor zur Erfassung von codetragenden Objekten auf. Dabei handelt es sich beispielsweise um einen Laserscanner, welcher die Objekte vermisst. Die Objektgeometrien werden dazu verwendet, die gelesenen Codes einem bestimmten Objekt zuzuordnen. Mehrdeutigkeiten bei gelesenen Codes beziehen sich vorzugsweise auf dasselbe Objekt, da verschiedene Objekte meist bestimmungsgemäß unterschiedliche Codes tragen. Der Geometrieerfassungssensor ist besonders dann vorteilhaft, wenn sich im Lesebereich des Codelesers mehrere Objekte befinden können. Eine Alternative ist sicherzustellen, dass jeweils nur ein Objekt erfassbar ist, wie etwa bei einzeln eingeführten Gepäckstücken oder Förderanlagen, die eine Vereinzelung mechanisch sicherstellen.

Die Codelesevorrichtung ist bevorzugt an einer Gepäcksortierungsanlage insbesondere eines Flughafens montiert. Das ist eine typische Anwendungssituation, in der mit ungültigen Codes oder Abrisscodes zu rechnen ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Blockdiagramm einer Codelesevorrichtung;
- Fig. 2: eine schematische Darstellung einer Codelesevorrichtung an einem Objekt,
- Fig. 3: eine dreidimensionale Ansicht einer Codelesevorrichtung als Lesetunnel an einem Förderband;
- Fig. 4: ein Ablaufdiagramm zur Vermeidung von Mehrfachlesungen durch Erkennen von Hauptcodes und ungültigen Codes; und
- Fig. 5: Beispiele realer Kamerabilder mit zu erfassenden Codebereichen.

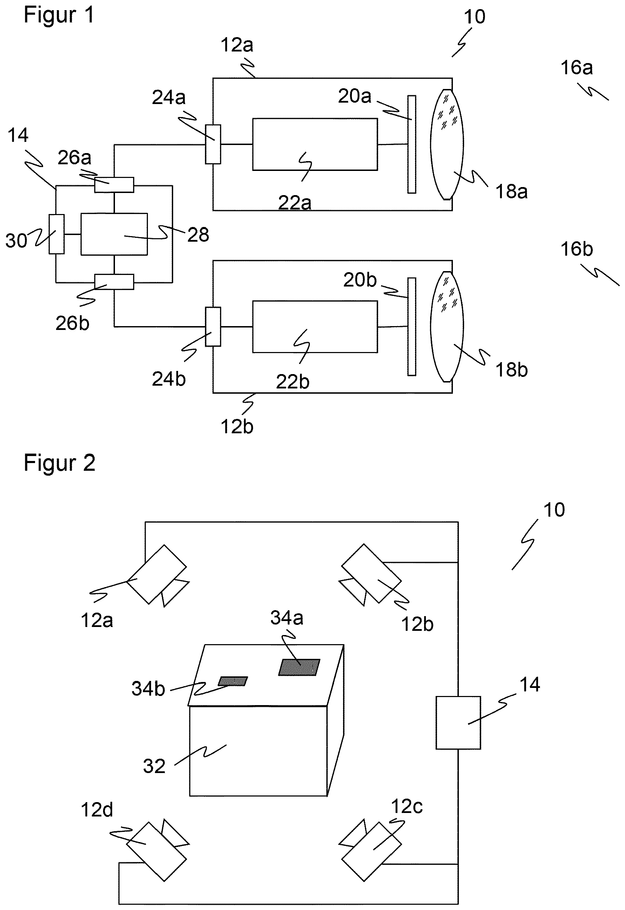

Figur 1 zeigt ein Blockdiagramm einer Codelesevorrichtung 10. Die Codelesevorrichtung 10 weist hier beispielhaft zwei kamerabasierte Codeleser 12a-b und eine Systemeinheit 14 als Zentralsteuerung auf. Andere Ausführungsformen umfassen weitere kamerabasierte Codeleser, nur einen kamerabasierten Codeleser oder in einem Hybridsystem mindestens einen zusätzlichen Barcodescanner.

Der jeweilige Codeleser 12a-b ist im Grundaufbau eine Kamera, die Empfangslicht aus einem Lesebereich 16a-b über eine vereinfacht als einzelne Linse dargestellte Empfangsoptik 18a-b auf einen Bildsensor 20a-b führt, beispielsweise eine Matrixanordnung von Lichtempfangselementen oder Pixeln. Bei Relativbewegung zwischen Codeleser 12a-b und zu erfassenden Objekten sind auch Zeilenkameras denkbar, die ein Gesamtbild im Laufe der Relativbewegung nach und nach zusammensetzen. Der dargestellte Aufbau ist rein schematisch und grob vereinfacht, beispielsweise sind eine vorteilhafte aktive Beleuchtungseinheit und weitgehend die Elektronik weggelassen.

Eine jeweilige Decodiereinheit 22a-b wertet die Bilddaten mittels Bildauswertung und Decodierverfahren aus, um darin Codebereiche aufzufinden und die dort codierte Information auszulesen. Bildverarbeitungsverfahren zur Segmentierung und der eigentlichen Decodierung sind an sich bekannt, sie werden im Rahmen der Erfindung nur angewandt und daher nicht genauer erläutert.

Die Ergebnisse der Decodierung werden an einer Schnittstelle 24a-b bereitgestellt. Die Systemeinheit 14 ist darüber mit entsprechenden Schnittstellen 26a-b mit den Codelesern 12a-b verbunden und erhält so Zugriff auf die Codeinformationen aller Codeleser 12a-b der Codelesevorrichtung 10. Die Schnittstellen 24a-b, 26a-b oder weitere Verbindungen können auch für zentrale Steuerungsaufgaben verwendet werden, auf die hier nicht weiter eingegangen wird.

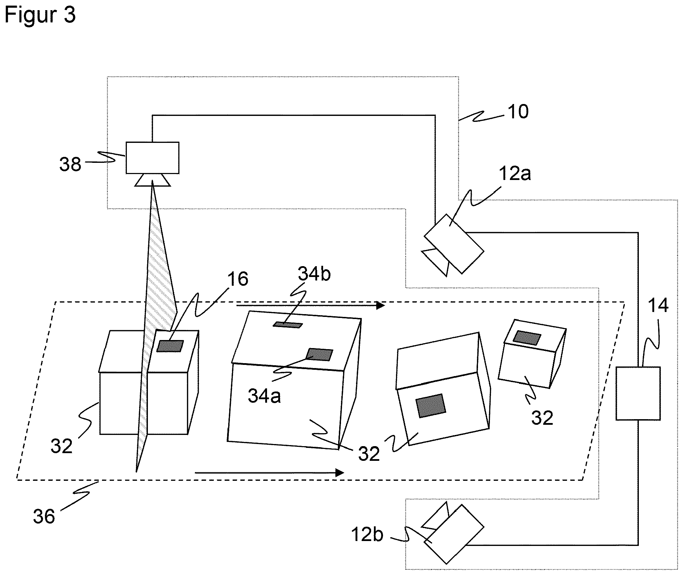

Eine Filtereinheit 28 untersucht auf eine später unter Bezugnahme auf die Figur 3 genauer zu erläuternde Weise die Decodierungsergebnisse auf Mehrfachlesungen und entscheidet in diesem Fall nach Möglichkeit anhand der Geometrie von Codebereichen, welcher Code als gültig anzusehen ist. Über eine zentrale Ausgabeschnittstelle 30 werden konsolidierte Leseergebnisse, insbesondere nur diejenigen von gültigen Codes, sowie Fehlermeldungen oder sonstige Nachrichten ausgegeben. Je nach Anwendung ist auch die Ausgabe weiterer Daten möglich, wie roher oder vorverarbeiteter Bilddaten und dergleichen.

Figur 1 stellt die Codelesevorrichtung 10 mit Decodiereinheit 22a-b in den Codelesern 12a-b und Filtereinheit 28 in der zentralen Systemeinheit 14 dar. Es gibt mehrere Alternativen zu dieser vorteilhaften Verteilung. Das eine Extrem zentralisiert vollständig, indem die Codeleser 12a-b nur Bilddaten liefern und sowohl Decodiereinheit 22a-b als auch Filtereinheit 28 in der Systemeinheit 14 untergebracht sind. Im anderen Extrem umfasst bereits der Codeleser 12a-b sowohl Decodiereinheit 22a-b als auch Filtereinheit 28. Es gibt dann keine Systemeinheit 14, oder zumindest ist sie nicht für die hier beschriebenen Aufgaben der Decodierung und Filterung zuständig. In den Codelesern 12a-b sind allerdings nur auf die eigene Perspektive begrenzte Bilddaten verfügbar, so dass nur ein Teil der Mehrfachlesungen auffällt. Zwischen diesen Extremen sind praktisch beliebige Aufgabenverteilungen denkbar. Außerdem kann die Systemeinheit 14 auch in einen oder mehrere der Codelesern 12a-b integriert sein, die dann als eine Art Master-Codeleser fungieren.

Figur 2 zeigt eine schematische Darstellung der Anordnung einer Codelesevorrichtung 10 an einem Objekt 32. In dieser Ausführungsform sind vier Codeleser 12a-d vorgesehen, wobei diese Anzahl erneut nur ein Beispiel ist. Solange nicht durch die Anwendung festgelegt ist, an welcher Seite das Objekt 32 Codes 34 trägt, sind mehrere Perspektiven durch mehrere Codeleser 12a-d vorteilhaft. Andere Beispiele sind sechs Codeleser von allen sechs Seiten, aber auch beispielsweise vier Codeleser in unterschiedlicher Orientierung von oben, vier Codeleser paarweise zu beiden Seiten mit Ausrichtung nach vorne und hinten oder (Teil)Kombinationen davon.

Das gezeigte Objekt 32 trägt zwei Codes 34a-b an seiner Oberseite. Beim Lesevorgang werden nun unter Umständen mehrere Codeleser 12a-d aufgrund teilweise überlappender Lesebereiche 16a-b den Code 34a oder den Code 34b mehrfach lesen. Diese Art Mehrfachlesung ist unschädlich. Zum einen kann sehr einfach festgestellt werden, dass es sich um identische Codeinformation handelt. Außerdem ist letztlich gleichgültig, mit welchem Satz redundanter Codeinformationen weitergearbeitet wird, da es zum selben Ergebnis führt.

Von Interesse ist der Fall, dass nur ein Code 34a ein Hauptcode mit relevanter Information, der andere Code 34b dagegen ein ungültiger Code ist. Ein Beispiel hierfür sind die einleitend genannten Abrisscodes. Solche Codes 34a-b können zueinander widersprüchliche Informationen enthalten, so dass derartige Mehrfachlesungen einer besonderen Behandlung bedürfen. Wie in Figur 2 auch dargestellt, weisen Hauptcodes und Abrisscodes unterschiedliche Geometrien, insbesondere Seitenverhältnisse auf, anhand derer die Filtereinheit 28 die Typen und damit Relevanz der Codes 34a-b unterscheidet.

Figur 3 zeigt eine dreidimensionale Ansicht einer Codelesevorrichtung 10 als Lesetunnel an einem Förderband 36, welches die Objekte 32 durch den Lesebereich 16a-b der Codeleser 12a-b fördert. Die Codelesevorrichtung 10 umfasst hier wieder rein beispielhaft zwei Codeleser 12a-b, mehr oder nur ein Codeleser sind ebenso denkbar. Bezüglich der durch Pfeile angedeuteten Förderrichtung oberhalb der Codeleser 12a-b ist ein zusätzlicher, optionaler Geometrieerfassungssensor 38 montiert. Damit können Objekte 32 vermessen und insbesondere die Codes 34a-b bestimmten Objekten 32 zugeordnet werden. Durch die Förderbewegung entsteht zusätzlich zu einer möglichen Redundanz bei der Codeerfassung durch mehrere Codeleser 12a-b eine weitere Redundanz, weil die Codes 34a-b wiederholt in verschiedenen Förderpositionen erfasst werden. Diese Art Mehrfachlesung ist, wie oben für den Fall mehrerer Codeleser 12ab mit teilweise überschneidenden Lesebereichen 16a-b schon ausgeführt, wegen der redundanten Codeinformation unschädlich.

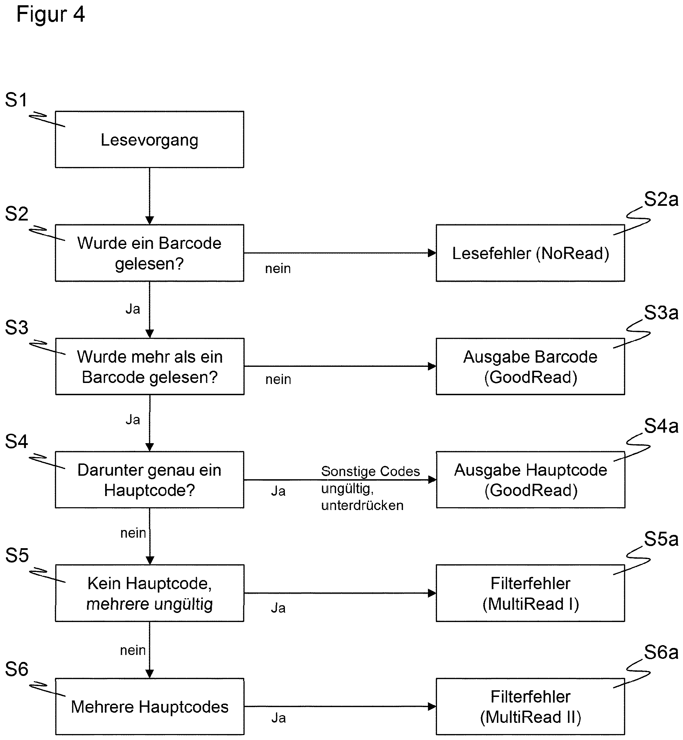

Figur 4 zeigt ein Diagramm für einen Ablauf in der Filtereinheit 28 zur Vermeidung von Mehrfachlesungen durch Erkennen von Hauptcodes 34a und ungültigen Codes 34b anhand der Geometrie. Dieser Ablauf ist ein Beispiel für einen Gesamtablauf, der weder in Bezug auf die Reihenfolge noch auf die einzelnen, teilweise optionalen Schritte als einschränkend zu verstehen ist. Im Diagramm sind die Codes 34a-b als Barcodes bezeichnet, was erneut eine vorteilhafte, aber nicht die einzige Ausführungsform ist.

Zunächst werden in einem Schritt S1 im Rahmen eines Lesevorgangs die Codes 34a-b durch die Codeleser 12a-b erfasst und ausgelesen. Ein Lesevorgang umfasst vorzugsweise sämtliche Erfassungen der Codes 34a-b, sei es durch mehrere Codeleser 12a-b und/oder mehrere Förderpositionen gemäß Figur 3, bis das betreffende Objekt 32 die Lesebereiche 16a-b verlassen hat. Das ist ein Grund, warum die Filtereinheit 28 vorteilhafterweise in der zentralen Systemeinheit 14 implementiert ist, die somit Zugriff auf alle Codeleseergebnisse hat.

In einem Schritt S2 wird geprüft, ob überhaupt im Rahmen des Lesevorgangs in Schritt S1 ein Code 34a-b gelesen wurde. Ist das nicht der Fall, so wird in einem Schritt S2a ein Lesefehler (NoRead) ausgegeben.

In einem Schritt S3 wird dann geprüft, ob mehr als ein Code 34a-b gelesen wurde. Wenn nicht, liegt keine Mehrfachlesung vor, und der einzige gelesene Code wird in einem Schritt S3a ausgegeben (GoodRead). Wie bereits wiederholt erwähnt, ist mit Mehrfachlesung nicht gemeint, dass ein und derselbe Code 34a oder 34b durch mehrere Codeleser 12a-b und/oder zu mehreren Zeitpunkten mehrfach gelesen wurde. Das wird anderweitig anhand der identischen Codeinformation ausgefiltert oder ignoriert, weil eine Mehrfachzuweisung der richtigen, redundant gelesenen Codeinformation zu einem Objekt 32 abgesehen von unnötiger Datenfülle unschädlich wäre.

Wenn der Ablauf nun noch nicht beendet ist, liegt eine genauer zu betrachtende Mehrfachlesung von mindestens zwei unterschiedlichen Barcodes 34a-b vor, es wurde also, um im Beispiel zu bleiben, sowohl der Code 34a als auch der Code 34b gelesen, und beide enthalten widersprüchliche Informationen.

In einem Schritt S4 wird nun geprüft, ob einer der mehreren gelesenen Codes 34a-b ein Hauptcode 34a ist. Dazu wird ein geometrisches Kriterium herangezogen, also die Geometrie der Codebereiche mit den Codes 34a-b ausgewertet. Durch die Segmentierung im Rahmen der Decodierung sind solche Geometrieinformationen vorzugsweise ohne erneute Verarbeitung der Bilddaten selbst verfügbar und können auch bereits direkt von der Decodiereinheit 20a-b bereitgestellt werden.

In einer bevorzugten Ausführungsform wird das Seitenverhältnis (Aspect Ratio) geprüft, d.h. das Verhältnis von Breite zu Höhe der Codebereiche. Bei Barcodes ist die Höhe durch die Strichlänge gegeben. Ein Hauptcode 34a wird dann angenommen, wenn das Seitenverhältnis einer zumindest annähernd quadratischen Form entspricht. Denn insbesondere bei Flughafen-Labels sind Hauptcodes 34a zumindest einigermaßen quadratisch, ungültige Codes 34b oder Abrisscodes dagegen sind viel breiter als hoch. Die quadratische Form lässt sich beispielsweise durch eine Schwelle des Seitenverhältnisses definieren. So wird beispielsweise ein Hauptcode 34a bei einem Seitenverhältnis von höchstens 1,5 : 1 angenommen, oder umgekehrt ein ungültiger Code 34b bei einem Seitenverhältnis von mindestens 1,5 : 1. Andere Werte n : 1 insbesondere mit n=2, 3, 4, 5, ..10 oder nicht ganzzahligem n sind denkbar. Der Wert für n kann auch relativ zu den vorhandenen Formen gewählt werden. Anschaulich gesprochen werden so die am ehesten einem Quadrat entsprechenden Formen unter den aktuell erfassten Codes 34a-b als Hauptcodes 34a, die übrigen als ungültige Codes 34b klassifiziert.

Stellt sich nun im Schritt S4 heraus, dass genau ein Code 34a-b gemäß dem geometrischen Kriterium ein Hauptcode 34a ist, so wird dieser Code 34a in einem Schritt S4a ausgegeben (zusätzlicher GoodRead). Der mindestens eine weitere Code 34b, der als ungültig erkannt ist, wird unterdrückt und nicht ausgegeben. Eine Information, dass beziehungsweise wie viele ungültige Codes 34b unterdrückt wurden, ist möglich. Alternativ werden ungültige Codes 34b mit ausgegeben, aber als solche markiert. Der Umgang mit ungültigen Codes 34b kann durch die Anforderungen in der jeweiligen Anwendung gewählt werden.

Gibt es gemäß Schritt S4 nicht genau einen Hauptcode 34a, so kann die Filtereinheit 28 die Mehrfachlesung nicht bereinigen, es bleibt bei einer Fehlermeldung (MultiRead) und üblicherweise einer manuellen Nachbearbeitung beziehungsweise Handsortierung. Es ist dann nicht klar, welcher Code 34a-b der auszuwertende Hauptcode 34a ist.

Es können dabei aber noch zwei Fälle unterschieden werden. Im Schritt S5 wird geprüft, ob überhaupt kein Hauptcode 34a vorliegt. Es sind also sämtliche gelesenen Codes 34a-b viel breiter als hoch und damit als ungültige Codes 34b klassifiziert.

Andernfalls bleibt in der Ablauflogik nur noch der Fall des Schrittes S6 übrig, dass mindestens zwei gelesene Codes 34a-b im Wesentlichen eine quadratische Form haben und daher als Hauptcode 34a angesehen würden.

In beiden Fällen mag es tatsächlich so sein, dass das Objekt 32 falsch mit Codes 34a-b ausgezeichnet ist, oder das geometrische Kriterium war für diesen Spezialfall nicht trennscharf genug. Jedenfalls kann die Filtereinheit 32 das Problem nicht lösen, deshalb wird jeweils in einem Schritt S5a oder S6a eine Fehlermeldung ausgegeben. Diese Fehlermeldung kann aber die beiden Fälle noch differenzieren, um die manuelle Nachbearbeitung beziehungsweise Fehlerdiagnose zu unterstützen. Außerdem können mit der Fehlermeldung auch die gelesenen Codeinformationen ausgegeben werden.

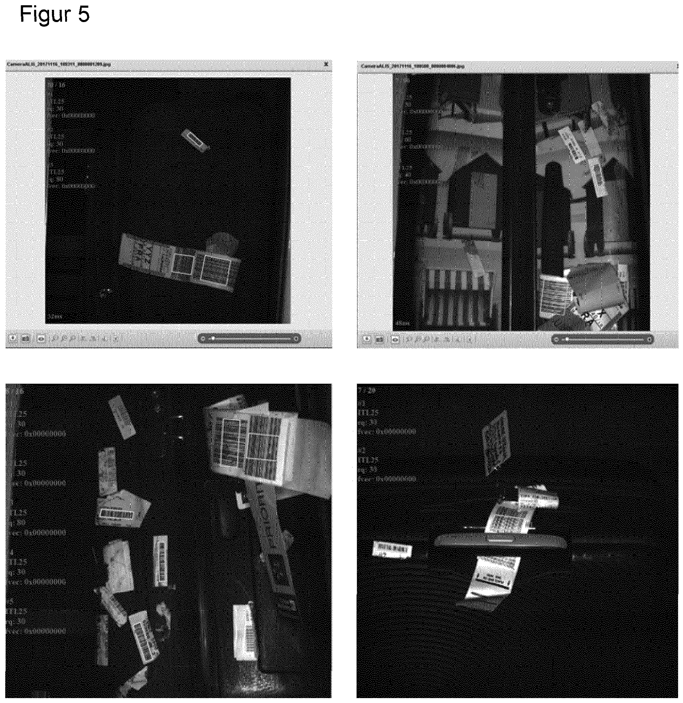

Figur 5 zeigt vier Beispiele realer Kamerabilder mit zu erfassenden Codebereichen. In allen vier Beispielen werden mehrere Codes unterschiedlichen Inhalts gelesen, es wären also herkömmlich Lesefehler (MultiRead). Erfindungsgemäß kann, beispielsweise nach Schritt S4, S4a des Ablaufdiagramms der Figur 4, ein Hauptcode identifiziert werden, und die zusätzlichen Abrisscodes werden unterdrückt.

Im Bild der Figur 5 oben links ist im unteren Teil eine Banderole mit zwei Hauptcodes und oben ein weiterer, schmaler Abrisscode zu sehen. Die beiden Hauptcodes enthalten redundante Informationen, effektiv wird deshalb nur ein Hauptcode gelesen. Der Abrisscode kann aufgrund seiner Form als solcher erkannt und unterdrückt werden.

Der Fall im Bild der Figur 5 unten links ist ähnlich. Hier ist die Banderole mit den Hauptcodes oben rechts angeordnet, und es gibt mehr als einen Abrisscode, die aber alle an ihrer Form erkannt und unterdrückt werden können.

Im Bild der Figur 5 oben rechts ist nur ein Hauptcode in der rechten unteren Ecke lesbar, zudem zwei an ihrer Form erkennbare Abrisscodes im oberen rechten Bereich.

Im Bild der Figur 5 unten rechts ist die ziemlich zentral angeordnete Banderole durch einen Griff nur teilweise sichtbar, es wird aber ein Hauptcode gelesen. Der Abrisscode links daneben hat eine deutlich langgestrecktere Form und wird daran erkannt und unterdrückt.

In einem Testaufbau an einem Gepäckförderband eines Flughafens wurden insgesamt die Codes 34a-b auf 885 Objekten durch eine Codelesevorrichtung 10 erfasst und die Ergebnisse mit und ohne eine erfindungsgemäße Filtereinheit 28 verglichen.

Ohne Filter wurden 772 Objekte erfolgreich gelesen, es traten 55 Mehrfachlesungen und 58 sonstige Fehler auf. Mit Filter stieg die Anzahl der erfolgreich gelesenen Objekte auf 817 bei nur noch 10 Mehrfachlesungen, während die sonstigen Fehler unverändert bei 58 blieben. Somit konnte die Fehlerrate durch Mehrfachlesung von 6,2% auf 1,1% gesenkt beziehungsweise die Leserate von 87,2% auf 92,3% gesteigert werden. Durch die erfindungsgemäße Filtermaßnahme lässt sich also ein Fehler beziehungsweise eine Nachbearbeitung durch Mehrfachlesung deutlich reduzieren.

## Patentansprüche

1. Optoelektronische Codelesevorrichtung (10), die mindestens einen kamerabasierten Codeleser (12a-b) mit einem Bildsensor (20a-b) zum Aufnehmen von Bilddaten aus einem Lesebereich (16a-b) sowie eine Steuer- und Auswertungseinheit (22, 28) aufweist, die eine Decodiereinheit (22a-b) zum Auffinden von Codebereichen in den Bilddaten und zum Auslesen von deren Codeinhalt sowie eine Filtereinheit (28) umfasst, um festzustellen, ob eine Mehrfachlesung stattgefunden hat, bei der mehrere Codes (34a-b) unterschiedlichen Inhalts gelesen wurden,
**dadurch gekennzeichnet,**
**dass** die Filtereinheit (28) weiterhin dafür ausgebildet ist, im Falle einer Mehrfachlesung die Geometrie der Codebereiche zu prüfen, um zu entscheiden, welcher der mehreren gelesenen Codes ein gültiger Code (34a) und welcher Code ein versehentlich mitgelesener Code (34b) ist.

2. Codelesevorrichtung (10) nach Anspruch 1,
wobei die Filtereinheit (28) dafür ausgebildet ist, die Geometrie anhand des Verhältnisses von Breite zu Höhe zu prüfen.

3. Codelesevorrichtung (10) nach Anspruch 1 oder 2,
wobei die Filtereinheit (28) dafür ausgebildet ist zu prüfen, ob die Geometrie einem Quadrat entspricht.

4. Codelesevorrichtung (10) nach Anspruch 3,
wobei die Filtereinheit (28) dafür ausgebildet ist, einen Code (34b) bei einer Geometrie mit Seitenverhältnis von zumindest 1,5:1 als nicht quadratisch zu erkennen, insbesondere von zumindest 2:1, 3:1 oder 4:1.

5. Codelesevorrichtung (10) nach Anspruch 3 oder 4,
wobei die Filtereinheit (28) dafür ausgebildet ist, einen nicht quadratischen Code (34b) als ungültigen Code anzusehen.

6. Codelesevorrichtung (10) nach einem der vorhergehenden Ansprüche,
wobei die Filtereinheit (28) dafür ausgebildet ist, eine Ausgabe von Codeinhalten ungültiger Codes (34b) zu unterdrücken.

7. Codelesevorrichtung (10) nach einem der vorhergehenden Ansprüche, wobei die Filtereinheit (28) dafür ausgebildet ist, im Falle mehrerer als gültig identifizierter Codes (34b) eine Mehrfachlesungs-Nachricht auszugeben.

8. Codelesevorrichtung (10) nach einem der vorhergehenden Ansprüche, wobei die Filtereinheit (28) dafür ausgebildet ist, im Falle keines als gültig, jedoch mehrerer als ungültig identifizierter Codes (34b) eine Mehrfachlesungs-Nachricht auszugeben.

9. Codelesevorrichtung (10) nach einem der vorhergehenden Ansprüche, wobei die Decodiereinheit (22) dafür ausgebildet ist, Barcodes zu decodieren.

10. Codelesevorrichtung (10) nach einem der vorhergehenden Ansprüche, wobei die Decodiereinheit (22) in dem Codeleser (12a-b) und die Filtereinheit (28) in einer Systemeinheit (14) außerhalb des Codelesers (12a-b) implementiert ist.

11. Codelesevorrichtung (10) nach einem der vorhergehenden Ansprüche, wobei die Decodiereinheit (22) dafür ausgebildet ist, das Verhältnis von Breite zu Höhe an die Filtereinheit (28) auszugeben.

12. Codelesevorrichtung (10) nach einem der vorhergehenden Ansprüche mit einem Geometrieerfassungssensor (38) zur Erfassung von codetragenden Objekten (32).

13. Codelesevorrichtung (10) nach einem der vorhergehenden Ansprüche,
die an einer Gepäcksortierungsanlage (36) insbesondere eines Flughafens montiert ist.

14. Verfahren zum Lesen von Codes (34a-b), bei dem Bilddaten aus einem Lesebereich (16a-b) aufgenommen werden, darin Codebereiche aufgefunden werden und deren Codeinhalt ausgelesen wird, und wobei festgestellt wird, ob eine Mehrfachlesung stattgefunden hat, bei der mehrere Codes (34a-b) unterschiedlichen Inhalts gelesen wurden,
**dadurch gekennzeichnet,**
**dass** im Falle einer Mehrfachlesung die Geometrie der Codebereiche geprüft wird, um zu entscheiden, welcher der mehreren gelesenen Codes ein gültiger Code (34a) und welcher Code ein versehentlich mitgelesener Code (34b) ist.

## Claims

1. An optoelectronic code reading apparatus (10) comprising at least one camera-based code reader (12a-b) having an image sensor (20a-b) for recording image data from a reading zone (16a-b) and a control and evaluation unit (22, 28) that comprises a decoding unit (22a-b) for locating code zones in the image data and for reading their code content and a filter unit (28) to determine whether a multiple reading has taken place in which a plurality of codes (34a-b) of different content were read,
**characterized in that** the filter unit (28) furthermore is configured to check the geometry of the code zones in the case of a multiple reading in order to decide which of the plurality of read codes is a valid code (34a) and which code is an accidentally read code (34b).

2. The code reading apparatus (10) in accordance with claim 1,
wherein the filter unit (28) is configured to check the geometry with reference to the ratio of width to height.

3. The code reading apparatus (10) in accordance with claim 1 or 2,
wherein the filter unit (28) is configured to check whether the geometry corresponds to a square.

4. The code reading apparatus (10) in accordance with claim 3,
wherein the filter unit (28) is configured to recognize a code as not square with a geometry having an aspect ratio of at least 1.5:1, in particular of 2:1, at least 3:1 or least 4:1.

5. The code reading apparatus (10) in accordance with claim 3 or 4,
wherein the filter unit (28) is configured to consider a non-square code as an invalid code.

6. The code reading apparatus (10) in accordance with any of the preceding claims,
wherein the filter unit (28) is configured to suppress an output of code content of invalid codes (34b).

7. The code reading apparatus (10) in accordance with any of the preceding claims,
wherein the filter unit (28) is configured to output a multiple reading message in the case of a plurality of codes (34a) identified as valid.

8. The code reading apparatus (10) in accordance with any of the preceding claims,
wherein the filter unit (28) is configured to output a multiple reading message in the case of no codes identified as valid, but of a plurality of codes (34b) identified as invalid.

9. The code reading apparatus (10) in accordance with any of the preceding claims,
wherein the decoding unit (22) is configured to decode barcodes.

10. The code reading apparatus (10) in accordance with any of the preceding claims,
wherein the decoding unit (22) is implemented in the code reader (12a-b) and the filter unit (28) is implemented in a system unit (14) outside the code reader !2a-b).

11. The code reading apparatus (10) in accordance with any of the preceding claims,
wherein the decoding unit (22) is configured to output the ratio of width to height to the filter unit (28).

12. The code reading apparatus (10) in accordance with any of the preceding claims,
having a geometry detection sensor (38) for detecting code-bearing objects (32).

13. The code reading apparatus (10) in accordance with any of the preceding claims,
that is installed at a baggage sorting system (36) in particular at an airport.

14. A method of reading codes (34a-b), wherein image data are recorded from a reading zone (16a-b), code zones are located therein, and their code content is read out, and wherein it is determined whether a multiple reading has taken place in which a plurality of codes (34a-b) of different content were read,
**characterized in that** the geometry of the code zones is checked in the case of a multiple reading in order to decide which of the plurality of read codes is a valid code (34a) and which code is an accidentally read code (34b).

## Revendications

1. Appareil de lecture de code optoélectronique (10) comprenant au moins un lecteur de code à caméra (12a-b) ayant un capteur d'image (20a-b) pour enregistrer des données d'image à partir d'une zone de lecture (16a-b) et une unité de commande et d'évaluation (22, 28) qui comprend une unité de décodage (22a-b) pour repérer les zones de code dans les données d'image et pour lire leur contenu de code et une unité de filtrage (28) pour déterminer si une lecture multiple a eu lieu où une pluralité de codes (34a-b) ayant des contenus différents ont été lus,
**caractérisé en ce que** l'unité de filtrage (28) est en outre configurée pour vérifier la géométrie des zones de code dans le cas d'une lecture multiple afin de décider lequel de la pluralité de codes lus est un code valide (34a) et lequel code est un code lu par accident (34b).

2. Appareil de lecture de code (10) selon la revendication 1,
dans lequel l'unité de filtrage (28) est configurée pour vérifier la géométrie sur la base du rapport largeur/hauteur.

3. Appareil de lecture de code (10) selon la revendication 1 ou 2,
dans lequel l'unité de filtrage (28) est configurée pour vérifier si la géométrie correspond à un carré.

4. Appareil de lecture de code (10) selon la revendication 3,
dans lequel l'unité de filtrage (28) est configurée pour reconnaître un code avec une géométrie ayant un rapport d'aspect d'au moins 1,5:1, comme n'étant pas carré, en particulier d'au moins 2:1, 3:1 ou 4:1.

5. Appareil de lecture de code (10) selon la revendication 3 ou 4,
dans lequel l'unité de filtrage (28) est configurée pour considérer un code non carré comme code invalide.

6. Appareil de lecture de code (10) selon l'une des revendications précédentes,
dans lequel l'unité de filtrage (28) est configurée pour supprimer une sortie de contenu de code des codes invalides (34b).

7. Appareil de lecture de code (10) selon l'une des revendications précédentes,
dans lequel l'unité de filtrage (28) est configurée pour délivrer un message de lecture multiple dans le cas d'une pluralité de codes (34a) identifiés comme valables.

8. Appareil de lecture de code (10) selon l'une des revendications précédentes,
dans lequel l'unité de filtrage (28) est configurée pour délivrer un message de lecture multiple dans le cas où aucun code n'est identifié comme valide, mais d'une pluralité de codes (34b) identifiés comme invalides.

9. Appareil de lecture de code (10) selon l'une des revendications précédentes,
dans lequel l'unité de décodage (22) est configurée pour décoder des codes à barres.

10. Appareil de lecture de code (10) selon l'une des revendications précédentes,
dans lequel l'unité de décodage (22) est mise en oeuvre dans le lecteur de code (12a-b) et l'unité de filtrage (28) est mise en oeuvre dans une unité système (14) à l'extérieur du lecteur de code (12a-b).

11. Appareil de lecture de code (10) selon l'une des revendications précédentes,
dans lequel l'unité de décodage (22) est configurée pour délivrer le rapport largeur/hauteur à l'unité de filtrage (28).

12. Appareil de lecture de code (10) selon l'une des revendications précédentes,
avec un capteur de détection de géométrie (38) pour détecter des objets porteurs de code (32).

13. Appareil de lecture de code (10) selon l'une des revendications précédentes,
qui est installé dans un système de tri des bagages (36), en particulier dans un aéroport.

14. Procédé de lecture de codes (34a-b), dans lequel des données d'image sont enregistrées à partir d'une zone de lecture (16a-b), des zones de code y sont situées, et leur contenu de code est lu, et dans lequel il est détermine si une lecture multiple a eu lieu dans laquelle une pluralité de codes (34a-b) de contenu différent a été lu,
**caractérisé en ce que** la géométrie des zones de code est contrôlée dans le cas d'une lecture multiple afin de décider lequel de la pluralité de codes lus est un code valide (34a) et lequel code est un code lu par accident (34b).
